# EUROPÄISCHE PATENTANMELDUNG

(11) **EP 1 459 918 A1**
(43) Veröffentlichungstag der Anmeldung: **22.09.2004**
(21) Anmeldenummer: 03290726.3
(22) Anmeldetag: 20.03.2003
(51) Int. Cl.: B60H 1/00

(54) **Klimaanlage für ein Kraftfahrzeug**

(71) Anmelder: Behr France S.A.R.L., F-68250 Rouffach (FR)
(72) Erfinder: Peter, Vincent, 68190 Ensisheim (FR)
(74) Vertreter: Grauel, Andreas, Dr.

(57) **Zusammenfassung**

Die Erfindung betrifft eine Klimaanlage für ein Kraftfahrzeug, welches einen Fahrzeuginnenraum (3) mit einem Frontbereich (4) und einem Fondbereich (5) aufweist, die beide von der Klimaanlage klimatisierbar sind und wobei die Klimaanlage mindestens einen Verdampfer, ein Gehäuse und ein Gebläse aufweist.

Es wird vorgeschlagen, dass die Klimaanlage (13) nur einen Verdampfer aufweist, dass der Verdampfer gegen einen Verdampfer höherer Kälteleistung austauschbar und dass an die Klimaanlage (13) ein Luftkanal (14) für die Klimatisierung des Fondbereich (5) anschließbar ist.

## Beschreibung

Die Erfindung betrifft eine Klimaanlage für ein Kraftfahrzeug nach dem Oberbegriff des Patentanspruches 1 - bekannt durch die DE-A 198 51 907.

Standardklimaanlagen sind für größere Limousinen oder Vans vielfach nicht ausreichend, daher werden für eine möglichst gleichmäßige Klimatisierung des gesamten Innenraumes des Kraftfahrzeuges Zusatzklimaanlagen oder zusätzliche Vorrichtungen zur Klimatisierung eingebaut. Durch die DE-A 198 51 905 wurde eine Klimaanlage für ein Kraftfahrzeug bekannt, welches einen Fahrzeuginnenraum mit einem Frontbereich (Fahrer und Beifahrer) und einem Fondbereich (Rücksitze) aufweist. Die Klimaanlage ist so ausgelegt und aufgebaut, dass sie sowohl den Front- als auch den Fondbereich klimatisieren kann: Dazu weist die bekannte Klimaanlage zwei Verdampfer auf, die in unterschiedlichen Gehäusen angeordnet sind, die einerseits im vorderen und andererseits im hinteren Bereich des Fahrzeuges eingebaut sind. Die Klimaanlage ist somit in zwei räumliche Einheiten geteilt, wobei die beiden Verdampfer über einen gemeinsamen Kältemittelkreislauf versorgt werden. Nachteilig bei dieser Klimaanlage, die sowohl als Standard- als auch als Zusatzklimaanlage eingesetzt werden kann, ist der erhöhte Bauraum, eine Vielzahl von Teilen sowie erhöhte Kosten.

Es ist Aufgabe der vorliegenden Erfindung, eine Klimaanlage der eingangs genannten Art zu schaffen, die sowohl eine Standard- als auch eine Zusatzklimatisierung übernehmen kann und die mit möglichst geringem Kostenaufwand und geringem Bauraum herstellbar ist

Diese Aufgabe wird durch die Merkmale des Patentanspruches 1 gelöst. Die erfindungsgemäße Klimaanlage ist grundsätzlich als Standardklimaanlage aufgebaut, d. h. sie besitzt nur einen Verdampfer, einen so genannten Standardverdampfer, der allerdings austauschbar ist gegen einen Verdampfer höherer Leistung, d. h. dann, wenn eine Zusatzklimatisierung des Fahrzeuges erwünscht ist. Der Standardverdampfer mit der Standardkälteleistung für die Standardklimaanlage wird dem Gehäuse der Klimaanlage entnommen und durch einen Verdampfer höherer Kälteleistung ersetzt. Durch diesen einfachen Austausch einer Komponente wird die Standardklimaanlage zur Klimaanlage mit Zusatzklimaanlage aufgerüstet. Dies bedeutet erhebliche Kostenvorteile, da nur ein Verdampfer in der Klimaanlage eingebaut ist und nicht zwei, wie beim Stand der Technik. Darüber hinaus ergeben sich durch die Mehrfachverwendung höhere Stückzahlen und damit geringere Fertigungskosten. Die Klimatisierung des Fondbereiches erfolgt durch einen Luftkanal, der von der Klimaanlage in den Fondbereich verlegt ist und die klimatisierte Luft im Fondbereich austreten lässt.

Nach einer vorteilhaften Weiterbildung der Erfindung ist die Klimaanlage als eine Baueinheit mit einem Gehäuse ausgebildet, die im vorderen Bereich des Fahrzeuges, im Motorraum und/oder am Armaturenbrett untergebracht ist. Es ist also keine zweite oder Zusatzklimaanlage erforderlich, die im hinteren Bereich des Fahrzeuges, z. B. im Kofferraum oder unter den Sitzen eingebaut werden muss. Insofern steht der Kofferraum für seine bestimmungsgemäße Benutzung voll zur Verfügung.

Nach einer weiteren Ausgestaltung der Erfindung ist der Luftkanal im Bodenbereich des Fahrzeuginnenraumes nach hinten bis in den Fondbereich verlegt und thermisch isoliert, damit Klimatisierungsverluste vermieden werden.

Nach einer weiteren vorteilhaften Ausgestaltung befindet sich im Austrittsbereich des Luftkanals ein Hilfsgebläse, welches für einen erhöhten Durchsatz an klimatisierter Luft für den Fondbereich sorgt. Damit wird der Klimatisierungseffekt im Fondbereich verstärkt, sofern entsprechender Bedarf bei den Fahrzeuginsassen besteht.

Nach einer vorteilhaften Weiterbildung der Erfindung ist der Luftkanal verzweigt und weist zwei oder mehrere Zweigleitungen mit mehreren Luftauslässen und Hilfsgebläsen an verschiedenen Stellen im Fondbereich auf. Dadurch kann die Zusatzklimatisierung im Fondbereich weiter verbessert, u. a. zugfrei gestaltet werden.

Ausführungsbeispiele der Erfindung sind in der Zeichnung dargestellt und werden im Folgenden näher beschrieben. Es zeigen
- Fig 1: einen Fahrzeuginnenraum mit Zusatzklimatisierung des Fondbereiches,
- Fig. 2: ein weiteres Ausführungsbeispiel der Luftverteilung im Fondbereich und
- Fig. 3: eine Klimaanlage.

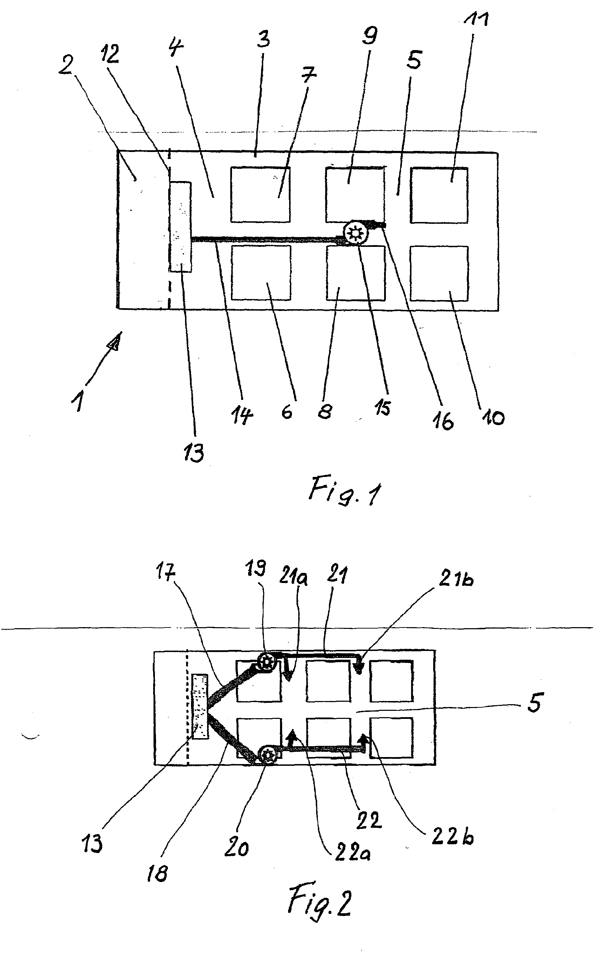

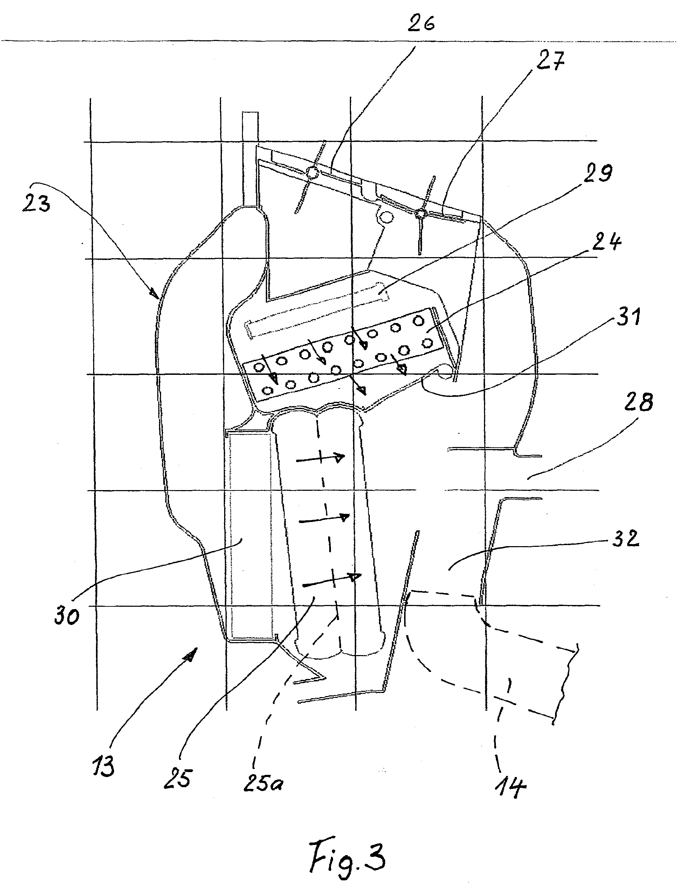

**Fig. 1** zeigt in schematischer Darstellung ein Kraftfahrzeug 1 mit einem vorderen Motorraum 2 und einem Fahrzeuginnenraum 3, welcher einen Frontbereich 4 und einen Fondbereich 5 aufweist. Im Frontbereich 4 sind zwei vordere Sitze 6, 7 und im Fondbereich 5 sind in zwei weiteren Reihen vier Sitze 8, 9, 10, 11 angeordnet - es handelt sich also um ein Van-Fahrzeug. Der Motorraum 2 ist vom Fahrzeuginnenraum 3 durch eine gestrichelt angedeutete Trennwand 12 abgeteilt, in deren Bereich eine Klimaanlage 13 angeordnet ist, die hier nur schematisch als Rechteck dargestellt ist und nicht dargestellte bekannte Komponenten wie Verdampfer, Gebläse etc. aufweist. (Die Klimaanlage 13 ist in Fig. 3 genauer dargestellt und wird unten ausführlicher beschrieben.) An die Klimaanlage 13 ist ein Luftkanal 14 angeschlossen, der im Bodenbereich des Fahrzeuginnenraumes 3 in den Fondbereich 5 führt und zwischen den Sitzen 7, 9 endet. Dort ist ein Hilfsgebläse 15 in den Endbereich des Luftkanals 14 eingeschaltet, welches klimatisierte Luft aus der Klimaanlage 13 ansaugt und über einen Luftausströmer 16 in den Fondbereich 5 fördert bzw. dort verteilt Der Luftkanal 14 soll möglichst gut thermisch isoliert sein, damit keine bzw. nur eine minimale Veränderung der Lufttemperatur auf dem Weg von der Klimaanlage 13 bis in den Fondbereich 5 auftritt.

**Fig. 2** zeigt ein weiteres Ausführungsbeispiel für die Verteilung von klimatisierter Luft im Fondbereich 5 des Fahrzeuges, welches hinsichtlich der Sitzanordnung dem Ausführungsbeispiel gemäß Fig. 1 entspricht. Im Unterschied zum Ausführungsbeispiel gemäß Fig. 1 ist der von der Klimaanlage 13 ausgehende Luftkanal in zwei Arme bzw. Zweigleitungen 17, 18 aufgeteilt, die zu den Außenseiten des Fahrzeuginnenraumes führen. Im Bereich der ersten Sitzreihe sind Gebläse 19, 20 in die Zweigleitungen 17, 18 eingebaut, daran schließen sich weitere Luftleitungsabschnitte 21, 22 mit Luftauslässen 21 a, 21 b sowie 22a, 22b hinter der ersten und der zweiten Sitzreihe bzw. im Bereich der B- und C-Säulen des Fahrzeuges an. Somit kann eine relativ gleichmäßige und zugfreie Verteilung der klimatisierten Luft im Fondbereich 5 erzielt werden. Weitere Varianten, z. B. ohne die hinteren Leitungsabschnitte 21, 22 mit den hinteren Auslässen 21 b, 22b sind möglich. Darüber hinaus ist eine vollständige Isolierung der Luftkanäle nicht immer erforderlich, d. h. eine Teilisolierung z. B. für die hinteren Leitungsabschnitte 21, 22 kann durchaus ausreichend sein.

**Fig. 3** zeigt die in Fig. 1 und Fig. 2 nur schematisch als Rechteck dargestellte Klimaanlage 13 mit ihren wesentlichen Komponenten - das Gebläse ausgenommen. In einem Klimaanlagengehäuse 23 sind ein Heizkörper 24 und ein Verdampfer 25 angeordnet, die jeweils in Richtung der Pfeile von Luft durchströmt werden. Das Gehäuse 23 weist verschiedene Luftauslässe auf, von denen hier zwei obere Luftauslässe 26, 27 sowie ein mittlerer Luftauslass 28 dargestellt sind, die für die Klimatisierung des Frontbereiches bestimmt sind. In Luftströmungsrichtung oberhalb des Heizkörpers 24 ist eine Zusatzheizvornchtung 29, und stromaufwärts des Verdampfers 25 ist ein Filter 30 angeordnet. In Luftströmungsrichtung hinter dem Heizkörper 24 ist eine Mischklappe 31 schwenkbar angeordnet, welche den aus dem Heizkörper 24 austretenden Warmluftstrom kontrolliert und mit dem aus dem Verdampfer 25 austretenden Kaltluftstrom mischt.

Unterhalb des mittleren Luftauslasses 28 ist ein weiterer Auslass 32 angeordnet, an welchen der Luftkanal 14 (vgl. Fig. 1) für die Luftversorgung des Fondbereiches anschließt. Der luftkanal 14 ist unmittelbar stromabwärts des Verdampfers 25 angeordnet und erhält somit hinreichend kalte bzw. klimatisierte Luft. Für den Fall, dass die Zusatzklimatisierung, d. h. der Anschluss des Luftkanals 14 nicht erforderlich ist, wird der Luftauslass 32 geschlossen. Der in der Zeichnung dargestellte Verdampfer 25 ist ein so genannter Austauschverdampfer, d. h. ein Verdampfer mit einer großeren Kälteleistung, die für die Zusatzklimatisierung der Fondbereiche ausgelegt ist. Der so genannte Standardverdampfer mit geringerer Kälteleistung wurde ausgetauscht, er weist in der Regel eine geringere Größe, z. B. eine geringere Durchströmungstiefe auf, was durch eine gestrichelte Linie 25a angedeutet ist. Der kleinere Verdampfer kann aber auch eine geringere Stirnfläche aufweisen oder eine geringere luftseitige Wärmeaustauschfläche. Der Austausch der Verdampfer kann beispielsweise senkrecht zur Zeichenebene erfolgen, d. h der Verdampfer 25 wird in dieser Richtung aus dem Gehäuse wie eine Schublade herausgezogen, und der Austauschverdampfer wird in entgegengesetzter Richtung eingeschoben.

Ein solcher Austausch des Standardverdampfers gegen einen Verdampfer höherer Kälteleistung ist beispielsweise dann geboten, wenn die Klimatisierung mit dem Standardverdampfer nicht ausreichend ist oder höhere Ansprüche an die Klimatisierung des Fondbereiches gestellt werden. Durch den ausgetauschten Verdampfer höherer Kälteleistung kann dann mehr Kaltluft erzeugt und über den Luftkanal 14 bzw. die Luftkanäle 17, 18 dem Fondbereich 5 zugeführt werden.

Die Klimaanlage 13 ist also im Prinzip eine Standardklimaanlage, die für eine Zusatzklimatisierung zunächst nicht ausgelegt ist, mit der Option, dass der Standardverdampfer gegen einen Verdampfer höherer Leistung austauschbar ist, sodass die Standardklimaanlage für eine Zusatzklimatisierung verwendbar ist.

### Bezugszahlen

- 1: Kraftfahrzeug
- 2: Motorraum
- 3: Fahrzeuginnenraum
- 4: Frontbereich
- 5: Fondbereich
- 6: Vordersitz
- 7: Vordersitz
- 8: Rücksitz
- 9: Rücksitz
- 10: Rücksitz
- 11: Rücksitz
- 12: Trennwand (Spritzwand)
- 13: Klimaanlage
- 14: Luftkanal
- 15: Hilfsgebläse
- 16: Luftauströmer
- 17: Zweigleitung
- 18: Zweigleitung
- 19: Gebläse
- 20: Gebläse
- 21: hinterer Leitungsabschnitt
- 21 a: Luftauslass
- 21 b: Luftauslass
- 22: hinterer Leitungsabschnitt
- 22a: Luftauslass
- 22b: Luftauslass
- 23: Gehäuse der Klimaanlage
- 24: Heizkörper
- 25: Verdampfer
- 26: oberer Luftauslass
- 27: oberer Luftauslass
- 28: mittlerer Luftauslass
- 29: Zusatzheizung
- 30: Filter
- 31: Mischklappe
- 32: unterer Luftauslass

## Patentansprüche

1. Klimaanlage für ein Kraftfahrzeug, welches einen Fahrzeuginnenraum (3) mit einem Frontbereich (4) und einem Fondbereich (5) aufweist, die beide von der Klimaanlage klimatisierbar sind und wobei die Klimaanlage mindestens einen Verdampfer, ein Gehäuse und ein Gebläse aufweist, **dadurch gekennzeichnet, dass** die Klimaanlage (13) nur einen Verdampfer aufweist, dass der Verdampfer gegen einen Verdampfer (25) höherer Kälteleistung austauschbar und dass an die Klimaanlage (13) ein Luftkanal (14) für die Klimatisierung des Fondbereiches (5) anschließbar ist.

2. Klimaanlage nach Anspruch 1, **dadurch gekennzeichnet, dass** die Klimaanlage als eine Baueinheit (13) mit einem Gehäuse ausgebildet ist, welches im vorderen Bereich (12) des Kraftfahrzeuges angeordnet ist.

3. Klimaanlage nach Anspruch 2, **dadurch gekennzeichnet, dass** der Luftkanal (14) vom Frontbereich (4) in den Fondbereich (5) führend angeordnet ist.

4. Klimaanlage nach Anspruch 1, 2, oder 3 **dadurch gekennzeichnet, dass** der Luftkanal (14) thermisch isoliert ist.

5. Klimaanlage nach Anspruch 1, 2, 3 oder 4, **dadurch gekennzeichnet, dass** der Luftkanal (14) einen Luftaustrittsbereich (16) im Fondbereich (5) aufweist und dass im Luftkanal (14) ein Hilfsgebläse (15) angeordnet ist.

6. Klimaanlage nach einem der vorhergehenden Ansprüche, **dadurch gekennzeichnet, dass** der Luftkanal in Zweigkanäle (17, 18) mit jeweils mindestens einem Luftauslass (21 a, 22a) und jeweils einem Hilfsgebläse (19, 20) aufgeteilt ist.

7. Klimaanlage nach Anspruch 6, **dadurch gekennzeichnet, dass** die Luftauslässe (21 a, 21 b, 22a, 22b) über den Fondbereich (5) verteilt angeordnet sind.

8. Verwendung einer Klimaanlage (13) nach einem der vorhergehenden Ansprüche als Standard- und als Zusatzklimaanlage.
